(19) Europäisches Patentamt
European Patent Office
Office européen des brevets

(11) Publication number : 0 585 887 A2

(12) # EUROPEAN PATENT APPLICATION

(21) Application number : 93113928.1

(51) Int. Cl.$^5$ : C08G 61/08

(22) Date of filing : 31.08.93

(30) Priority : 31.08.92 JP 255466/92

(43) Date of publication of application :
09.03.94 Bulletin 94/10

(84) Designated Contracting States :
BE DE DK FR GB IT NL SE

(71) Applicant : NIPPON ZEON CO., LTD.
6-1, Marunouchi 2-chome
Chiyoda-ku Tokyo 100 (JP)

(72) Inventor : Sugawara, Tomoo
480-1, Miyauchi, Nakahara-ku
Kawasaki-shi, Kanagawa (JP)
Inventor : Wada, Yasumasa
1-304, 2-26, Kajiwara
Kamakura-shi, Kanagawa (JP)

(74) Representative : von Kreisler, Alek, Dipl.-Chem. et al
Patentanwälte von Kreisler-Selting-Werner
Bahnhofsvorplatz 1 (Deichmannhaus)
D-50667 Köln (DE)

(54) **Activated metathesis catalyst system.**

(57) An organic halide activator component is used in combination with a halogen-free organoammonium molybdate or tungstate catalyst and a halogen-free trialkylaluminum cocatalyst in the ring-opening metathesis polymerization of norbornene functional monomers. The activator component is characterized by having 1 or 2 halogen substituents per molecule with the proviso that said halogen substituent(s) is not bonded to a carbon that contains a double bond. The organic halide activators of this invention enhance the conversion of monomer to polymer without the corrosion problems inherent with prior activated metathesis catalytic systems.

EP 0 585 887 A2

## BACKGROUND OF THE INVENTION

### 1. Technical Field

This invention relates to the ring-opening metathesis polymerization of norbornene-functional monomers. In particular, this invention relates to a metathesis catalyst system comprising a halogen-free catalyst component, a halogen-free cocatalyst component, and a halogenated activator component. The metathesis catalyst system of the present invention is useful for the in-mold bulk polymerization of norbornene-functional monomers to high conversions and without the concomitant mold corrosion problems of the prior art.

### 2. State of the Art

Methods of polymerizing norbornene-functional monomers such as norbornene, dicyclopentadiene, and tetracyclododecene by ring-opening polymerization are well-known. Such polymerizations have been carried out in the presence of a metathesis catalyst system comprising a halogen-free organoammonium molybdate or tungstate catalyst, an organoaluminum halide cocatalyst, and a halogenated activator such as silicon tetrachloride. These reactions are typically conducted in an in-mold bulk process yielding tough thermoset molded articles.

Reaction injection molding (RIM) is a form of in-mold bulk polymerization. In the reaction injection molding of norbornene-functional monomers, the catalyst and cocatalyst components of the metathesis catalyst system are dissolved in separate aliquots of monomer to form reactant monomeric solutions. Reactant streams from each of the catalyst and cocatalyst reactant solutions are mixed to form a reactive solution which is subsequently conveyed into a closed mold. A chemical reaction occurs in the mold transforming the monomer into a polymeric state wherein a polymeric article in the shape of the mold is produced. Typical RIM molded parts include bumpers, fenders, and body panels for the automotive and recreational vehicle industries.

When producing rigid thermoset molded articles by in-mold polymerization, it is imperative that conversion of monomer to polymer approach at least 96 percent. Ideally, the conversion of monomer to polymer should approach about 98 to 100 percent. Small amounts of unconverted monomer adversely affect the physical properties of the polymeric end-product. In one aspect, the unconverted monomer tends to plasticize the polymer matrix, leading to inferior product performance. In another aspect, small amounts of unconverted monomer that become entrained within the polymer matrix eventually volatilizes out of the matrix causing paint and surface coating adhesion problems. Moreover, many norbornene-functional monomers, especially dicyclopentadiene, emit strong odor.

High conversions of monomer to polymer have not heretofore been attained when organoammonium molybdate or tungstate catalysts are employed in conjunction with halogen-free organoaluminum cocatalysts. Even when employing the organoammonium molybdate or tungstate catalyst in combination with an organoaluminum halide cocatalyst, monomer conversions of 95 percent or better cannot be attained unless a halogen activator is added to the catalyst system as disclosed in European Patent Application No. 87117015.5 (Publication No. 0 269 948).

Although conversions are sufficiently high when employing an organoammonium molybdate and/or tungstate catalyst in combination with an organoaluminum halide cocatalyst and a halogenated silane compound (e.g., silicon tetrachloride), an inherent drawback is mold corrosion. It is believed that labile halogen from the cocatalyst and activator compounds react with moisture to form hydrogen halides (e.g., hydrogen chloride). Over time (e.g., after several molding cycles) metallic molds and tooling corrode due to the presence of these corrosive compounds. Needless to say, metal molds and tooling are very expensive to repair or to replace.

Accordingly there is a need for an in-mold bulk polymerization process that employs a metathesis catalyst system that provides for high monomer to polymer conversions without concomitant mold corrosion problems.

## SUMMARY OF THE INVENTION

It is a primary object of the invention to provide a metathesis catalyst system that provides in-mold bulk polymerizable reactive formulations with high conversions of monomer to polymer without mold corrosion problems.

It is another object of the invention to provide a metathesis catalyst system that employs a halogen-free catalyst and cocatalyst.

It is a further object of this invention to provide storage stable reactant formulations.

It is a still further object of the invention to provide a process for the in-mold bulk polymerization of norbornene-functional monomers to high conversions without concomitant mold corrosion.

These and other objects of the invention are achieved by a metathesis catalyst system comprising a halogen-free organoammonium molybdate and/or tungstate catalyst, a halogen-free trialkylaluminum cocatalyst, and a halogenated activator component having at least one but no more than two halogen substituents per molecule and wherein said halogen substituent(s) is not attached to a carbon atom having a double bond.

The catalyst system of this invention is useful in the ring-opening metathesis polymerization of cycloolefins that contain at least one norbornene functionality. The polymerization reaction is conducted in bulk with RIM being the preferred method. In RIM, a reaction solution containing a metathesis catalyst, cocatalyst, and activator is conveyed into a mold cavity and polymerized. A tough solid article having the shape of the mold cavity is produced.

## DETAILED DESCRIPTION

### Cycloolefin Monomer

The monomer that is employed in the present invention is a cycloolefin that is characterized by containing at least one norbornene-functional group in its structure as identified by the formula below which can be substituted or unsubstituted.

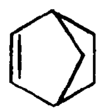

I

Preferred species are identified by formulae II and III below:

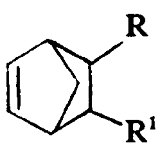

II

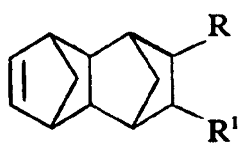

III

wherein R and $R^1$ are independently selected from hydrogen $C_1$ to $C_{20}$ alkyl, $C_1$ to $C_5$ alkylidenyl, $C_2$ to $C_{20}$ alkenyl, $C_6$ to $C_{20}$ aryl, and saturated and unsaturated cyclic groups containing 3 to 12 carbon atoms formed by R and $R^1$ taken together with the ring carbon atoms connected thereto. It should be noted that when R and/or $R^1$ is alkylidene the bond line between the R and $R^1$ substituents and the ring carbon atom connected thereto represents a double bond.

Examples of norbornene-functional monomers defined by the formulae above include bicyclic monomers such as 2-norbornene, 5-methyl-2-norbornene, 5-ethyl-2-norbornene, 5-butyl-2-norbornene, 5-hexyl-2-norbornene, 5-vinyl-2-norbornene, 5-ethylidene-2-norbornene, 5-phenyl-2-norbornene, and the like; tricyclic monomers such as dicyclopentadiene, dihydrodicyclopentadiene, and the like; tetracyclic monomers such as tetracyclododecene, methyl tetracyclododecene, tetracyclododecadiene, ethyl tetracyclododecene, dimethyl tetracyclododence, ethylidene tetracyclododecene, phenyl tetracyclododecene, and the like; pentacyclic monomers such as tricyclopentadiene (symmetrical and asymmetrical trimers), and the like; and heptacyclic monomers such as tetracyclopentadiene, and the like. The foregoing monomers can be used alone or in combination. The tricyclic and pentacyclic monomers are preferred because of their availability, reactivity, and end-product properties.

In addition to the substituents set forth above, the foregoing monomers can be substituted with cyano, ester, ether, and/or pyridyl groups so long as such groups do not affect mold corrosion or inhibit the metathesis catalyst system.

Optionally, monocycloolefins such as cyclobutadiene, cyclopentene, cyclopentadiene, cyclooctene, cyclododecene, and the like, which are capable of ring-opening metathesis polymerization, can be utilized with one or more of the foregoing norbornene-functional monomers as long as the properties of the end-product are not adversely affected.

### Metathesis Catalyst

The metathesis catalysts suitable in the practice of the present invention are selected from halogen-free

molybdenum and tungsten compounds. Any such compound can be used so long as it is monomer soluble. Of these the isopoly and heteropoly molybdate and/or tungstate salts are preferred. Especially preferred are the organoammonium molybdates and tungstates disclosed in U.S. Patent No. 4,380,617 which is herein incorporated by reference.

The ammonium or organoammonium molybdate and tungstate catalysts suitable in the present invention are defined as follows:

$$[R_4N]_{(2y-6x)}M_xO_y \qquad [R_3NH]_{2y-6x)}M_xO_y$$

where O represents oxygen; M represents either molybdenum or tungsten; x and y represent the number of M and O atoms, respectively, in the molecule based on the valence of +6 for molybdenum, +6 for tungsten, and -2 for oxygen.

In a preferred embodiment, the R radicals are selected from alkyl groups each containing 1 to 18 carbon atoms wherein the sum of carbon atoms on all the R radicals is from 20 to 72, more preferably from 25 to 48. In a preferred embodiment, the radicals are selected from alkyl groups each containing from 1 to 18 carbon atoms wherein the sum of carbon atoms on all of the radicals is from 15 to 54, more preferably from 21 to 42.

Specific examples of suitable organoammonium molybdates and tungstates that fall under the above formulae include tridodecylammonium molybdates and tungstates, methyltricaprylammonium molybdates and tungstates, tri(tridecyl)ammonium molybdates and tungstates, and the like.

The organoammonium molybdate or tungstate or a mixture thereof, is employed at a level of about 0.01 to 50 millimoles molybdenum or tungsten per mole of total monomer, preferably 0.1 to 20.0 millimoles.

## Cocatalyst

A halogen-free lower trialkylaluminum compound is utilized as the cocatalyst component in the present invention. By lower alkyl is meant alkyl groups having 1 to 8 carbon atoms. The alkyl groups can be branched or unbranched with alkyl groups of 1 to 4 carbon atoms being preferred. Representative lower trialkylaluminum compounds include trimethylaluminum, triethylaluminum, tri-n-propylaluminum, triisopropylaluminum, tri-n-butyl-aluminum and triisobutylaluminum. The ratio of cocatalyst to catalyst employed is about 0.1 to about 200 (mole ratio) and preferably about 1 to about 10 (mole ratio).

## Activators

The organic halide activator component of this invention improves the conversion of monomer to polymer without concomitant metal mold surface corrosion problems associated with prior RIM processes. The organic halide activator components of the present invention are substituted with 1 to 2 carbon atoms per compound with the proviso that the halogen atom(s) on the non-aromatic alcohols described below cannot be attached to carbon atoms that contain a double bond. In other words, the halogen atom(s) cannot be bonded to a carbon atom that contains C=C or C=O moieties.

It has been found that halogen atoms tend to be labile when bonded directly to carbon atoms containing a double bond. The labile halogen reacts with moisture to form a hydrogen halide acid which in turn corrodes the mold surface.

The organic halide activator components of the present invention are selected from haloalcohols, haloketones, halogenated aromatic alcohols, halogenated organic silicon compounds, halogenated hydrocarbons, and mixtures thereof. By halogenated silicon compounds is meant that the halogen substitution occurs on the organic moiety that is bonded to the silicon atom. Compounds that have a halogen atom directly bonded to the silicon atom are not contemplated within the scope of the present halogenated silicon compounds.

Suitable haloalcohols include 2-chloroethanol, 2,2-dichloroethanol, 1-chloro-2-propanol, 1,3-dichloro-2-propanol, 1,1-dichloro-2-propanol, 1-chloro-2-butanol, 1-chloro-3-methoxy-2-propanol, 1,3-dibromo-2-propanol, 1,3-diiodo-2-propanol, 2-chlorocyclohexanol, and mixtures thereof.

Suitable haloketones include 1-chloroacetone, 1,1-dichloroacetone, 1,3,dichloroacetone, chloromethyl ethyl ketone, 2-chlorocyclopentanone, 1-chlorocyclohexanone, 1,1-dichloroacetophenone, and mixtures thereof.

Suitable halogenated aromatic compounds include 3-chlorophenol, 2,6,dibromophenol, 2,6-dibromo-4-methyl phenol, 2,4-dichloronaphthal, and mixtures thereof.

Suitable halogenated silicon compounds include (dichloromethyl)trimethylsilane, (1,3-dichloro-2-propoxy) trimethylsilane, and mixtures thereof.

Suitable halogenated hydrocarbons include monochloroethane, 1,1-dichloroethane, 1,2-dichloroethane, 1-bromoethane, 1,1-dibromoethane, 1,2-dibromoethane, 1-chloropropane, 1-chlorobutane, 1-chloropentane, 1-chlorocyclopentane, 1,3-dichloropentane, 1,3-dichlorocyclopentane, 1-chlorohexane, 1-chlorocyclohexane,

1,3-dichlorohexane, 5-chlorocyclopentene-2, 1,2-dichloroethylene, and mixtures thereof.

The haloalcohols, haloketones, and haloaromatics are preferred activators. Of these, the β-haloalcohols, o-halophenols, and m-halophenols are particularly preferred.

The ratio of activator to catalyst ranges from about 0.1 to about 200 (mole ratio) and preferably from about 1 to about 10 (mole ratio).

**Additives**

The properties of a molded product can be modified by the addition of antioxidants, UV absorbing agents, elastomers, polymer modifying agents, fillers, coloring agents, flame retardants, crosslinking agents, lubricants, fragrances or masking agents, foaming agents, whiskers for smooth surface appearance, and the like.

Suitable antioxidants include any antioxidant used for plastic and rubber manufacturing. The antioxidants can be phenol, phosphorus, or amine based compounds. The antioxidants can be used singly, or preferably in combination. The formulation ratio is more than 0.5 part preferably 1 to 3 parts of antioxidant per 100 parts by weight of norbornene-functional monomer. The antioxidant may be copolymerizable with the monomer such as 5-(3,5-di-tertiary-butyl-4-hydroxybenzyl-2-norbornene), which is a norbornenylphenol based compound (Japanese Kokai No. 57-83522).

Suitable elastomers include natural rubber, polybutadiene, polyisoprene, styrene-butadiene copolymer (SBR), styrene-butadiene-styrene block copolymer (SBS), styrene-isoprene-styrene copolymer (SIS), ethylene-propylene-diene terpolymer (EPDM), ethylene-vinyl acetate copolymer (EVA), and their hydrogenated derivatives. The addition of elastomer to the reactant solution(s) improves reactant solution viscosity as well as impact properties of the molded product. The mix ratio of elastomer to monomer is 0.5 part elastomer by weight or more, and preferably 1 to 10 parts by weight, with respect to the norbornene monomer.

Suitable fillers include glass powder, carbon black, talc, calcium carbonate, mica, aluminum hydroxide, and the like. Preferably, such fillers may be surface treated with a silane coupling agent.

Fiber reinforcing agents such as glass, carbon, and the like can also be used.

Sulfur and peroxide crosslinking agents can be employed to improve heat resistance.

The additives can be dissolved or dispersed in at least one of the monomer reactant solutions prior to the reaction injection molding process. When employing fiber reinforced materials, the fibers can be dispersed within the reactant solution or placed in the mold prior to mold filling.

**Polymerization Method**

The preferred in-mold polymerization process is carried out by reaction injection molding (RIM) of the norbornene-functional monomers. In the RIM method, a monomer mixture is divided into two portions and stored in separate vessels. The metathesis catalyst is added to one container, and the metathesis cocatalyst is added to the other container to form two reactant solutions. The two reactant solutions are subsequently mixed to form a reactive solution which is then conveyed into a heated mold wherein a chemical reaction takes place to transform the monomer to the polymeric state within a matter of minutes. The halogen activator compounds of this invention can be added to the catalyst formulation or to the cocatalyst formulation. Alternatively, the activator can be added to the combined catalyst/cocatalyst reactive formulation as a separate reactant stream to be mixed with the catalyst and cocatalyst formulations prior to conveyance into the mold.

Surprisingly, it has been discovered that the activator compounds can be added or formulated with the catalyst. Prior halogen activator components such as silicon tetrachloride could not be formulated with the catalyst. The silicon tetrachloride/catalyst combination caused the monomer to prematurely polymerize. Storage stable formulations comprising catalyst/halogen activator could not be attained. Consequently, the halogen containing activator always had to be formulated with the cocatalyst stream.

In the RIM process a conventional RIM machine is used for mixing the two reactant solutions. In this case, the two reactant solutions are fed from two individual containers. The two streams are instantly mixed in the impingement mixing head of the RIM machine and then injected into a heated mold where instantaneous polymerization occurs, yielding a hard, tough molded thermoset product.

Optionally, after the mixing of the two reactant solutions or streams, the reactive solution can be injected into the preheated mold in several portions as disclosed in Japanese Kokai No. 59-51911 (U.S. Patent No. 4,426,502). Alternatively, the reaction solution can be injected in a continuous mode. In this embodiment, the apparatus is smaller in comparison to an impingement type mixing apparatus, allowing the process to be carried out at lower operating pressures. When a large amount of glass fiber reinforcement is utilized within the mold, the injection of reaction solution may be carried out at a low injection speed to allow the solution to homogeneously infiltrate the glass fibers.

This invention is not limited to a two reactant stream process. A third reactant stream (or a plurality of streams) containing an additional reactant(s) or additive(s) can be employed in the present process.

The mold temperature employed is commonly greater than room temperature, preferably between about 40 to about 200°C, and more preferably between about to 50 to about 120°C. The clamping pressure is commonly between about 0.1 to about 100 kg/cm$^2$.

The reactant solutions are stored under an inert gas atmosphere such as nitrogen, and also should be processed under such an inert atmosphere. However, the mold does not necessarily have to contain an inert gas.

The invention will be discussed in more detail in the following examples which are not intended to serve as a limitation of the scope thereof. In these examples, all parts are parts by weight and all percentages are percentages by weight unless otherwise specified.

The reactivity of the catalyst system was characterized by the following parameters:

Pot Life (PL): defined as the time interval from the mixing of the catalyst and cocatalyst reactant solutions to the point at which the reactive solution so formed reaches a pudding-like consistency.

Exothermic Peak Time (ETPT): defined as the time interval from the mixing of the catalyst and cocatalyst reactant solutions to the point where the maximum exothermic temperature produced by the reaction is attained.

Corrosion Test: A metal coupon (SS-41) was immersed in the reactant solution containing the halogen activator component. The reactant solution was kept at 23°C at 50 percent humidity. After a 10 hour immersion period, the coupon was removed from the solution and observed for corrosion. The presence of a red rust on the coupon is indicative of mold corrosion. Coupons exhibiting little or no red rust were given a rating of 0.

**Examples 1 to 4**

To a monomer mixture comprising 90 parts dicyclopentadiene (DCPD) and 10 parts tricyclopentadiene (TCPD), tridodecylammonium molybdate catalyst was added and dissolved to give a catalyst concentration of 10 millimoles. Four aliquots (10 milliliters each) of the reactant solution so formed were placed in separate 50 milliliter vials. To three of the vials 2-chlorophenol was added at the concentration levels specified in Table 1. No activator was added to the fourth vial.

Separately, a cocatalyst reactant solution was prepared by adding triethylaluminum (1.0 mole/l dissolved in 90:10 DCPD:TCPD) to a monomer mixture of 90 parts DCPD and 10 parts TCPD to a concentration level of 40 millimoles. Ten milliliters of the cocatalyst reactant solution was then added with mixing to each of the vials containing the catalyst/activator reactant solution. The two reactant solutions were mixed at 30°C under a nitrogen blanket and polymerized to a hard, rigid, highly converted polymer. The results are shown in Table 1 below.

Table 1

| | Example | | | |
|---|---|---|---|---|
| | 1 | 2 | 3 | 4* |
| 2-chlorophenol (millimoles) | 20 | 40 | 60 | ---- |
| Pot Life (Seconds) | 25 | 20 | 55 | 600< |
| ETPT (Seconds) | 122 | 87 | 250 | 600< |

* Comparative example

A catalyst/activator reactant solution of the identical composition set forth in Example 2 was subjected to the corrosion test. No rusting of the coupon was observed.

**Example 5**

**(Comparative Example)**

A catalyst/activator solution was prepared by adding tridodecylammonium molybdate (1.0 mole/l dissolved in 90:10 DCPD:TCPD) and silicon tetrachloride (1.0 mole/l dissolved in 90:10 DCPD:TCPD) to a monomer mixture comprising 90 parts DCPD and 10 parts TCPD to give concentrations of 10 millimoles and 20 millimoles, respectively.

A cocatalyst reactant solution was prepared by adding diethylaluminum chloride (1.0 mole/l dissolved in 90:10 DCPD:TCPD) and n-propyl alcohol to a monomer mixture of 90 parts DCPD and 10 parts TCPD to concentrations 40 millimoles each. Equal aliquots (ten milliliters) of the catalyst/activator and cocatalyst reactant solutions were placed in a 50 milliliter vial and polymerized as in Example 1. A hard, rigid, highly converted polymer was obtained.

A separate corrosion test was conducted on the catalyst/activator reactant solution as set forth in Example 1. A red rust formed on all coupon surfaces.

**Examples 6 to 12**

Catalyst/activator reactant formulations were prepared by dissolving tridodecylammonium molybdate in a monomer mixture of 90 parts DCPD and 10 parts TCPD to a concentration level of 10 millimoles. Separate aliquots of the catalyst/activator formulation were taken and the halide activators set forth in Table 2 were dissolved in the respective aliquots to a concentration level of 40 millimoles.

A cocatalyst reactant formulation was prepared as set forth in Examples 1 to 3. A 1:1 ratio of catalyst/activator formulation to cocatalyst formulation was mixed and polymerized in 50 ml vials. Separate corrosion tests were conducted on each catalyst/activator formulation. The results are given in Table 2 below.

Table 2

| | Activator | PL (sec.) | ETPT (sec.) | Corrosion |
|---|---|---|---|---|
| Example 6 | 3-chlorophenol | 18 | 85 | 0 |
| Example 7 | 2,6-dibromo-4-methylphenol | 1≧ | 25 | 0 |
| Example 8 | 2,4-dichloronaphtol | 7 | 57 | 0 |
| Example 9 | 2,2-dichloroethanol | 100 | 310 | 0 |
| Example 10 | 1,1-dichloroacetone | 1≧ | 27 | 0 |
| Example 11 | (dichloromethyl)-trimethylsilane | 3 | 230 | 0 |
| Example 12 | (1,3-dichloro-2-propoxy)-trimethylsilane | 10 | 180 | 0 |

**Example 13**

A catalyst/activator and a cocatalyst reactant solution were prepared and polymerized as set forth in Examples 6 to 12, except that the activator employed was 2,6-dibromophenol. The pot life of the reactive formulation was 6 seconds and the exothermal peak time was 55 seconds. The catalyst/activator solution did not corrode the metal coupon.

**Claims**

1. A process for preparing a polymeric article by in-mold polymerization comprising combining a plurality of reactant streams, one of which comprises a catalyst component selected from the group consisting of organoammonium molybdates, organoammonium tungstates, and mixtures thereof and an organic halide activator selected from the group consisting of haloalcohols, haloketones, halogenated aromatic alcohols, halogenated $C_2$ to $C_6$ hydrocarbons, haloorganosilanes, and mixtures thereof with the proviso that said

activator must contain 1 or 2 halogen substituents and the non-aromatic activators cannot have halogen atoms bonded to carbons with double bonds and said haloorganosilanes do not have a halogen atom bonded to the silicon atom, and a second of which comprises an organoaluminum cocatalyst component selected from the group consisting of lower trialkylaluminum compounds and mixtures thereof, wherein at least one of said reactant streams contains one or more norbornene-functional monomers, to form a reactive mixture; conveying said reaction to a mold where polymerization occurs.

2. The process of claim 1 wherein said activator is selected from the group consisting of 2-chloroethanol, 2,2-dichloroethanol, 1-chloro-2-propanol, 1,3-dichloro-2-propanol, 1,1-dichloro-2-propanol, 1-chloro-2-butanol, 1-chloro-3-methoxy-2-propanol, 1,3-dibromo-2-propanol, 1,3-diiodo-2-propanol, 2-chlorocyclohexanol, 1-chloroacetone, 1,1-dichloroacetone, 1,3,dichloroacetone, chloromethyl ethyl ketone, 2-chlorocyclopentanone, 1-chlorocyclohexanone, 1,1-dichloroacetophenone, 2-chlorophenol, 3-chlorophenol, 2,6,dibromophenol, 2,6-dibromo-4-methyl phenol, 2,4-dichloronaphthal, (dichloromethyl)trimethylsilane, (1,3-dichloro-2-propoxy) trimethylsilane, monochloroethane, 1,1-dichloroethane, 1,2-dichloroethane, 1-bromoethane, 1,1-dibromoethane, 1,2-dibromoethane, 1-chloropropane, 1-chlorobutane, 1-chloropentane, 1-chlorocyclopentane, 1,3-dichloropentane, 1,3-dichlorocyclopentane, 1-chlorohexane, 1-chlorocyclohexane, 1,3-dichlorohexane, 5-chlorocyclopentene-2, 1,2-dichloroethylene, and mixtures thereof.

3. The process of claim 1 wherein said cocatalyst component is selected from the group consisting of branched and unbranched $C_1$ to $C_8$ trialkylaluminum compounds.

4. The process of claim 1 wherein said catalyst component is selected from compounds represented by the formula:

$$[R_4N]_{(2y-6x)}M_xO_y \qquad [R_3NH]_{2y-6x)}M_xO_y$$

where O represents oxygen; M represents either molybdenum or tungsten; x and y represent the number of M and O atoms, respectively, in the molecule based on the valence of +6 for molybdenum, +6 for tungsten, and -2 for oxygen, wherein the R radicals are independently selected from alkyl groups containing 1 to 18 carbon atoms, and wherein the sum of carbon atoms on all the R radicals is from 20 to 72.

5. The process of claim 4 wherein said catalyst is selected from the group consisting of tridodecylammonium molybdates and tungstates, methyltricaprylammonium molybdates and tungstates, tri(tridecyl)ammonium molybdates and tungstates.

6. The process of claim 1 wherein said monomer is selected from the group consisting of 2-norbornene, 5-methyl-2-norbornene, 5-ethyl-2-norbornene, 5-butyl-2-norbornene, 5-hexyl-2-norbornene, S-vinyl-2-norbornene, 5-ethylidene-2-norbornene, 5-phenyl-2-norbornene, dicyclopentadiene, dihydrodicyclopentadiene, tetracyclododecene, methyl tetracyclododecene, tetracyclododecadiene, ethyl tetracyclododecene, dimethyl tetracyclododence, ethylidene tetracyclododecene, phenyl tetracyclododecene, tricyclopentadiene, and mixtures thereof.

7. The process of claim 6 wherein said monomer is dicyclopentadiene.

8. A metathesis polymerizable feed composition comprising an organoammonium molybdate or tungstate catalyst, at least one norbornene-functional monomer, and an organic halide activator selected from the group consisting of haloalcohols, haloketones, halogenated aromatic alcohols, halogenated $C_2$ to $C_6$ hydrocarbons, haloorganosilanes, and mixtures thereof with the proviso that said activator must contain 1 or 2 halogen substituents and the non-aromatic activators cannot have halogen atoms bonded to carbons with double bonds, and wherein said haloorganosilanes cannot have a halogen bonded to the silicon atom.

9. The feed composition of claim 8 wherein said activator is selected from the group consisting of 2-chloroethanol, 2,2-dichloroethanol, 1-chloro-2-propanol, 1,3-dichloro-2-propanol, 1,1-dichloro-2-propanol, 1-chloro-2-butanol, 1-chloro-3-methoxy-2-propanol, 1,3-dibromo-2-propanol, 1,3-diiodo-2-propanol, 2-chlorocyclohexanol, 1-chloroacetone, 1,1-dichloroacetone, 1,3,dichloroacetone, chloromethyl ethyl ketone, 2-chlorocyclopentanone, 1-chlorocyclohexanone, 1,1-dichloroacetophenone, 2-chlorophenol, 3-chlorophenol, 2,6,dibromophenol, 2,6-dibromo-4-methyl phenol, 2,4-dichloronaphthal, (dichloromethyl)trimethylsilane, (1,3-dichloro-2-propoxy) trimethylsilane, monochloroethane, 1,1-dichloroethane, 1,2-dichloroethane, 1-bromoethane, 1,1-dibromoethane, 1,2-dibromoethane, 1-chloropropane, 1-chlorobutane, 1-chloropentane, 1-chlorocyclopentane, 1,3-dichloropentane, 1,3-dichlorocyclopentane, 1-chlorohexane, 1-chlorocyclohexane, 1,3-dichlorohexane, 5-chlorocyclopentene-2, 1,2-dichloroethylene,

and mixtures thereof.

**10.** The feed composition of claim 8 wherein said catalyst component is selected from compounds represented by the formula:

$$[R_4N]_{(2y-6x)}M_xO_y \qquad [R_3NH]_{2y-6x)}M_xO_y$$

where O represents oxygen; M represents either molybdenum or tungsten; x and y represent the number of M and O atoms, respectively, in the molecule based on the valence of +6 for molybdenum, +6 for tungsten, and -2 for oxygen, wherein the R radicals are independently selected from alkyl groups containing 1 to 18 carbon atoms, and wherein the sum of carbon atoms on all the R radicals is from 20 to 72.

**11.** The feed composition of claim 10 wherein said catalyst is selected from the group consisting of tridodecylammonium molybdates and tungstates, methyltricaprylammonium molybdates and tungstates, tri(tridecyl)ammonium molybdates and tungstates, and the like.

**12.** The feed composition of claim 8 wherein said monomer is selected from the group consisting of 2-norbornene, 5-methyl-2-norbornene, 5-ethyl-2-norbornene, 5-butyl-2-norbornene, 5-hexyl-2-norbornene, 5-vinyl-2-norbornene, 5-ethylidene-2-norbornene, 5-phenyl-2-norbornene, dicyclopentadiene, dihydrodicyclopentadiene, tetracyclododecene, methyl tetracyclododecene, ethyl tetracyclododecene, dimethyl tetracyclododence, ethylidene tetracyclododecene, phenyl tetracyclododecene, tricyclopentadiene, and mixtures thereof.

**13.** The feed composition of claim 12 wherein said monomer is dicyclopentadiene.

**14.** A reactive feed composition for making a ring-opened polymer of dicyclopentadiene comprising dicyclopentadiene, an organoammonium molybdate catalyst, a $C_1$ to $C_8$ trialkylaluminum cocatalyst and an organic halide activator component selected from the group consisting of haloalcohols, haloketones, halogenated aromatic alcohols, halogenated $C_2$ to $C_6$ hydrocarbons, haloorganosilanes, and mixtures thereof with the proviso that said activator must contain 1 or 2 halogen substituents and the non-aromatic activators cannot have halogen atoms bonded to carbons with double bonds, and wherein said haloorganosilanes cannot have a halogen bonded to the silicon atom.

**15.** The composition of claim 14 wherein said cocatalyst is selected from the group consisting of trimethylaluminum, triethylaluminum, tri-n-propylaluminum, triisopropylaluminum, tri-n-butylaluminum, triisobutylaluminum, and mixtures thereof.

**16.** The composition of claim 15, further comprising tricyclopentadiene.

**17.** The composition of claim 14 wherein said activator is selected from the group consisting of 2-chloroethanol, 2,2-dichloroethanol, 1-chloro-2-propanol, 1,3-dichloro-2-propanol, 1,1-dichloro-2-propanol, 1-chloro-2-butanol, 1-chloro-3-methoxy-2-propanol, 1,3-dibromo-2-propanol, 1,3-diiodo-2-propanol, 2-chlorocyclohexanol, 1-chloroacetone, 1,1-dichloroacetone, 1,3,dichloroacetone, chloromethyl ethyl ketone, 2-chlorocyclopentanone, 1-chlorocyclohexanone, 1,1-dichloroacetophenone, 2-chlorophenol, 3-chlorophenol, 2,6,dibromophenol, 2,6-dibromo-4-methyl phenol, 2,4-dichloronaphthal, (dichloromethyl)trimethylsilane, (1,3-dichloro-2-propoxy) trimethylsilane, monochloroethane, 1,1-dichloroethane, 1,2-dichloroethane, 1-bromoethane, 1,1-dibromoethane, 1,2-dibromoethane, 1-chloropropane, 1-chlorobutane, 1-chloropentane, 1-chlorocyclopentane, 1,3-dichloropentane, 1,3-dichlorocyclopentane, 1-chlorohexane, 1-chlorocyclohexane, 1,3-dichlorohexane, 5-chlorocyclopentene-2, 1,2-dichloroethylene, and mixtures thereof.